(19) Europäisches Patentamt / European Patent Office / Office européen des brevets

(11) **EP 3 962 197 A1**

(12) **EUROPEAN PATENT APPLICATION**
published in accordance with Art. 153(4) EPC

(43) Date of publication:
**02.03.2022 Bulletin 2022/09**

(21) Application number: **19926185.0**

(22) Date of filing: **26.04.2019**

(51) International Patent Classification (IPC):
**H04W 72/04** (2009.01)

(52) Cooperative Patent Classification (CPC):
**H04W 72/04**

(86) International application number:
**PCT/JP2019/018123**

(87) International publication number:
**WO 2020/217517 (29.10.2020 Gazette 2020/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Chiyoda-Ku**
**Tokyo 100-6150 (JP)**

(72) Inventors:
• **MATSUMURA, Yuki**
  **Tokyo 100-6150 (JP)**
• **NAGATA, Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **USER TERMINAL AND WIRELESS COMMUNICATION METHOD**

(57) A user terminal according to an aspect of the present disclosure includes a receiving section that receives downlink shared channels (Physical Downlink Shared Channels (PDSCHs)) from a plurality of transmission/reception points (TRPs), and a control section that determines, based on a first identifier utilized to initialize a psudo random sequence generator used to generate a sequence for a specific reference signal, a second identifier for data scrambling of the PDSCHs in a case where a given condition is satisfied. According to an aspect of the present disclosure, it is possible to appropriately determine scramble sequences for PDSCHs in a case where multiple TRPs are utilized.

```
PDSCH-Config ::=                    SEQUENCE {
    dataScramblingIdentityPDSCH         INTEGER (0..1023)   OPTIONAL,   -- Need S
    ...
    dataScramblingIdentityPDSCH_R-16    INTEGER (0..1023)   OPTIONAL,   -- Need S
    ...
}
```

FIG. 2

## Description

Technical Field

The present disclosure relates to a user terminal and a radio communication method in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems (for example, NR), studies have been conducted about DL transmission (for example, Physical Downlink Shared Channel (PDSCH) transmission) to a user terminal (User Equipment (UE)) performed by one or a plurality of transmission/reception points (TRPs) (multiple TRPs).

In NR, to identify a source, a destination, and the like, smooth transmission power properties of signals, and so on, a base station applies scrambling to signals (for example, data) transmitted to the UE to randomize the transmission signals as much as possible.

However, existing Rel-15 NR specifications do not take multiple TRPs into account, and thus the Rel-15 NR specifications contain no definition regarding how to determine scrambling of PDSCHs transmitted from multiple TRPs Thus, following the current NR specifications may prevent suitable achievement of spatial diversity gain, high-rank transmission, and so on that are otherwise achieved by the use of multiple TRPs, thus possibly suppressing an increase in communication throughput.

Thus, an object of the present disclosure is to provide a user terminal and a radio communication method that can appropriately determine scramble sequences for PDSCHs in a case where multiple TRPs are utilized.

Solution to Problem

A user terminal according to an aspect of the present disclosure includes a receiving section that receives downlink shared channels (Physical Downlink Shared Channels (PDSCHs)) from a plurality of transmission/reception points (TRPs), and a control section that determines, based on a first identifier utilized to initialize a psudo random sequence generator used to generate a sequence for a specific reference signal, a second identifier for data scrambling of the PDSCHs in a case where a given condition is satisfied.

Advantageous Effects of Invention

According to an aspect of the present disclosure, it is possible to appropriately determine scramble sequences for PDSCHs in a case where multiple TRPs are utilized.

Brief Description of Drawings

FIGS. 1A to 1D are each a diagram to show an example of a multi-TRP scenario;

FIG. 2 is a diagram to show a part of content of an RRC information element "PDSCH-Config" according to Embodiment 2-1;

FIG. 3 is a diagram to show a part of content of the RRC information element "PDSCH-Config" according to Embodiment 2-2;

FIG. 4 is a diagram to show an example of a schematic structure of a radio communication system according to one embodiment;

FIG. 5 is a diagram to show an example of a structure of a base station according to one embodiment;

FIG. 6 is a diagram to show an example of a structure of a user terminal according to one embodiment; and

FIG. 7 is a diagram to show an example of a hardware structure of the base station and the user terminal according to one embodiment.


Description of Embodiments


(Multiple TRPs)

For NR, studies have been conducted about DL transmission (for example, Physical Downlink Shared Channel (PDSCH) transmission) to a UE performed by one or a plurality of transmission/reception points (multiple TRPs) by using one or a plurality of panels (multiple panels).

Note that the plurality of TRPs may correspond to an identical cell identifier (ID), or may correspond to different cell IDs. The cell ID may be a physical cell ID, or may be a virtual cell ID.

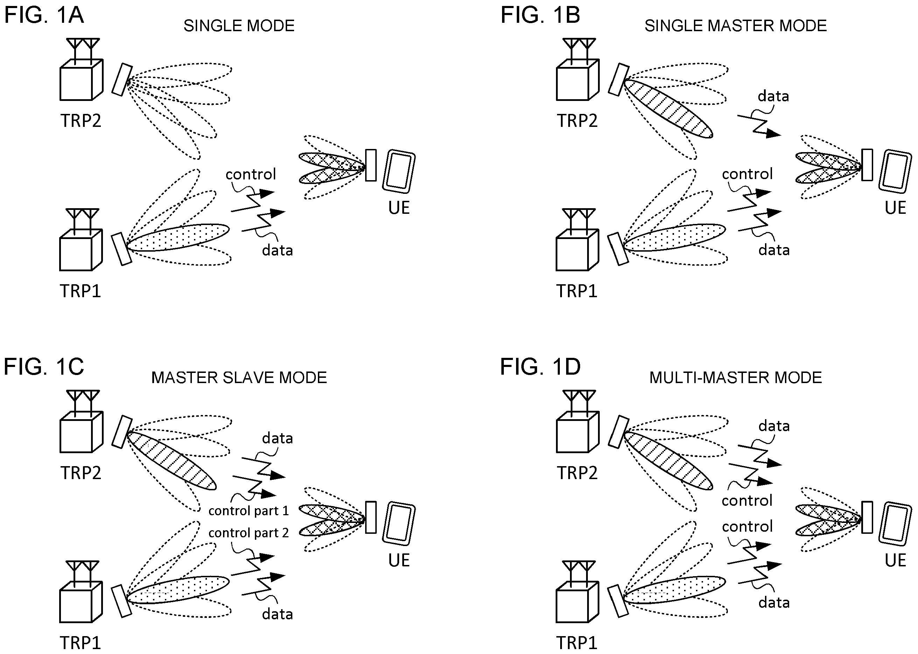

FIGS. 1A to 1D are each a diagram to show an example of a multi-TRP scenario. In these examples, it is assumed that each TRP can transmit four different beams, but this is not restrictive.

FIG. 1A shows an example of a case in which only one TRP (in the present example, TRP 1) out of the multiple TRPs performs transmission to the UE (which may be referred to as a single mode, a single TRP, or the like). In this case, TRP 1 transmits both a control signal (Physical Downlink Control Channel (PDCCH)) and a data signal (PDSCH) to the UE.

FIG. 1B shows an example of a case in which only one TRP (in the present example, TRP 1) out of the multiple TRPs transmits a control signal to the UE, and each of the multiple TRPs transmits a data signal (which may be referred to as a single master mode). The UE receives each PDSCH transmitted from the multiple TRPs, based on one piece of downlink control information (DCI).

FIG. 1C shows an example of a case in which each of the multiple TRPs transmits a part of a control signal to the UE, and each of the multiple TRPs transmits a data signal (which may be referred to as a master slave mode). In TRP 1, part 1 of the control signal (DCI) may be transmitted, and in TRP 2, part 2 of the control signal (DCI) may be transmitted. Part 2 of the control signal may depend on part 1. The UE receives each PDSCH transmitted from the multiple TRPs, based on these parts of DCI.

FIG. 1D shows an example of a case in which each of the multiple TRPs transmits separate control signals to the UE, and each of the multiple TRPs transmits a data signal (which may be referred to as a multi-master mode). In TRP 1, a first control signal (DCI) may be transmitted, and in TRP 2, a second control signal (DCI) may be transmitted. The UE receives each PDSCH transmitted from the multiple TRPs, based on these pieces of DCI.

In a case where a plurality of PDSCHs from the multiple TRPs as shown in FIG. 1B are scheduled by using one piece of DCI, the piece of DCI may be referred to as single DCI (single PDCCH). In a case where a plurality of PDSCHs from the multiple TRPs as shown in FIG. 1D are scheduled by using a plurality of pieces of DCI, the plurality of pieces of DCI may be referred to as multiple pieces of DCI (multiple PDCCHs (multiple PDCCHs)).

According to the multi-TRP scenario as described above, more flexible transmission control using channels with satisfactory quality can be performed.

From each TRP of the multiple TRPs, a different code word (CW) and a different layer may be transmitted. As one form of the multi-TRP transmission, non-coherent joint transmission (NCJT) has been under study.

In NCJT, for example, TRP 1 performs modulation mapping of the first code word and performs layer mapping so as to transmit the first PDSCH by using first precoding for a first number of layers (for example, two layers). TRP 2 performs modulation mapping of the second code word and performs layer mapping so as to transmit the second PDSCH by using second precoding for a second number of layers (for example, two layers). It may be assumed that these first PDSCH and second PDSCH are not in a relationship of quasi-co-location (QCL) (not quasi-co-located).

Note that the plurality of PDSCHs subjected to NCJT may be defined to partially or entirely overlap in terms of at least one of the time and frequency domains. In other words, at least one of time and frequency resources of the first PDSCH from the first TRP and the second PDSCH from the second TRP may overlap.

(Scrambling)

In NR, to identify a source, a destination, and the like, smooth transmission power properties of signals, and so on, a base station applies scrambling to signals (for example, data) transmitted to the UE to randomize the transmission signals as much as possible.

For example, in existing Rel-15 NR, the UE may assume that scrambling has been applied before modulation to a block of bits (or bit sequence) in a codeword transmitted in the PDSCH (and the UE may modulate the PDSCH, based on the assumption).

The scrambling sequence applied to the codeword in the PDSCH may be generated by using a scrambling sequence generator. Note that the scrambling sequence may be, for example, a 31-length gold sequence.

In the present disclosure, scrambling may be interchangeably interpreted with scramble. For example, a scrambling sequence may be interchangeably interpreted with a scramble sequence.

The generator may be initialized by using $c_{init}$ shown in Equation 1.

$$\text{(Equation 1)} \quad c_{init} = n_{RNTI} * 2^{15} + q * 2^{14} + n_{ID}$$

Here, $n_{RNTI}$ may correspond to a radio network temporary identifier (RNTI) associated with the PDSCH. q may correspond to an index (for example, 0 or 1) for the codeword. $n_{ID}$ corresponds to the value of an ID (that may be referred to as a data scrambling ID, a scramble ID, and so on) used to initialize data scrambling of the PDSCH.

$n_{ID}$ may correspond to a higher layer parameter related to a data scrambling ID of the PDSCH (for example, an RRC parameter "dataScramblingIdentityPDSCH") in a case where a certain condition is satisfied and may otherwise correspond to a cell identifier (ID) .

The certain condition may be, for example, a condition that dataScramblingIdentityPDSCH is configured and that the RNTI is a given type of RNTI (cell RNTI or the like) and that the PDSCH has not been scheduled by using DCI format 1_0 in a common search space.

Note that in the present disclosure, an index, an ID, an indicator, and so on may be interchangeably interpreted.

In Rel-15 NR, the RRC parameter "dataScramblingIdentityPDSCH" may take an integer of 0 or more and 1023 or less.

However, existing Rel-15 NR specifications do not take multiple TRPs into account, and thus the Rel-15 NR specifications contain no definition regarding how to determine scrambling of PDSCHs transmitted from multiple TRPs. Thus, following the current NR specifications may prevent suitable achievement of spatial diversity gain, high-rank transmission, and so on that are otherwise achieved by the use of multiple TRPs, thus possibly suppressing an increase in communication throughput.

Thus, the inventors of the present invention came up with a method for appropriately determining scramble sequences for the PDSCHs from multiple TRPs. According to an aspect of the present invention, the identifier (ID) related to the scramble sequence for each PDSCH can be identified for each TRP.

Embodiments according to the present disclosure will be described in detail with reference to the drawings as follows. The radio communication methods according to respective embodiments may each be employed individually, or may be employed in combination.

Note that, in the present disclosure, the followings may be interchangeably interpreted: a panel, an Uplink (UL) transmission entity, a TRP, a demodulation reference signal (DMRS) port, a DMRS port group, a code division multiplexing (CDM) group, a group associated with a given reference signal, a control resource set (CORESET) group, a CORESET, a PDSCH, a codeword, a base station, and so on. A panel Identifier (ID) and a panel may be interchangeably interpreted with each other. A TRP ID and a TRP may be interchangeably interpreted.

In the present disclosure, NCJT, NCJT using multiple TRPs, multiple PDSCHs using NCJT, multiple PDSCHs, a plurality of PDSCHs from multiple TRPs may be interchangeably interpreted.

Note that in the present disclosure, the higher layer signaling may be, for example, any one of Radio Resource Control (RRC) signaling, Medium Access Control (MAC) signaling, broadcast information, and the like, or a combination of these.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

(Radio Communication Method)

<First Embodiment>

In a first embodiment, the UE determines scramble sequences for multiple PDSCHs, based on an equation obtained by, for example, expanding or modifying Equation 1 of $c_{init}$.
Briefly speaking, the first embodiment can be classified into the following embodiments, each of which will be described below.

- Embodiment 1-1: $n_{ID}$ is expanded,
- Embodiment 1-2: a term corresponding to information of a scramble sequence explicitly specified by a field in DCI is added to the equation of $c_{init}$, and
- Embodiment 1-3: a term corresponding to information of a scramble sequence implicitly specified by a field in DCI is added to the equation of $c_{init}$.

<<Embodiment 1-1>>

In Embodiment 1-1, the UE may determine a data scrambling ID (for example, $n_{ID}$ in Equation 1) of the PDSCH, based on a scramble ID of a specific reference signal in a case where a given condition is satisfied.
In this regard, the specific reference signal may be, for example, a DMRS for the PDSCH, a DMRS for the PDCCH, a DMRS for a PBCH, a channel state information reference signal (CSI-RS), and so on. The DMRS for the PDSCH in the present embodiment may be interpreted as any other reference signal.
The scramble ID of the reference signal may mean a scramble ID used to initialize a pseudo-random sequence generator used to generate a sequence of the reference signals. Note that the pseudo random sequence may be, for example, a 31-length gold sequence.
When receiving an indication of or assuming one Transmission Configuration Indication state (TCI state) for PDSCH reception, the UE may use, as the data scrambling ID of the PDSCH, the value provided by the RRC parameter "dataScramblingIdentityPDSCH" as described above. Note that the TCI state in the present disclosure may be interpreted as QCL, TCI, and so on.
Note that the TCI state for PDSCH reception may be indicated by a TCI state field included in the DCI scheduling the PDSCH.
The TCI state for PDSCH reception may be assumed in a case where the TCI state for the PDSCH is prevented from being definitely identified, such as a case where the TCI state is not indicated by the DCI or a case where the time from DCI reception until PDSCH reception is short, preventing the TCI state from being switched. The assumed TCI state may be referred to as a default TCI state
Note that in the present disclosure, even with multiple TRPs for PDSCH reception configured for the UE, the UE may receive an indication of or assume one TCI state for PDSCH reception (in other words, in instantaneous terms, transmission to and reception from multiple TRPs may be switched to transmission to and reception from a single TRP).
When receiving an indication of or assuming a plurality of TCI states for PDSCH reception, the UE may determine the data scrambling ID of the PDSCH, based on the scramble ID of the specific reference signal. For example, in this case, with a first scramble ID for the DMRS for the PDSCH configured, the UE may use, as the data scrambling ID of the PDSCH, the remainder of division of the first scramble ID by 1024 (= mod (first scramble ID, 1024)).
With a second scramble ID for the DMRS for the PDSCH configured, the UE may use, as the data scrambling ID of the PDSCH, the remainder of division of the second scramble ID by 1024 (= mod (second scramble ID, 1024)).
Note that in the present disclosure, in regard to a plurality of TCI states for PDSCH reception, the PDSCH (in other words, a plurality of PDSCHs) may be assumed as a PDSCH transmitting an identical codeword or different codewords by using at least one identical symbol.
Note that the first scramble ID may correspond to a scramble ID parameter ("scramblingID0") included in an RRC information element "DMRS-DownlinkConfig" related to the DMRS for the PDSCH. The second scramble ID may correspond to another scramble ID parameter ("scramblingID1") included in "DMRS-DownlinkConfig" related to the DMRS. In Rel-15 NR, scramblingID0 and scramblingID1 may take a value of 0 or more and 65535 or less.
When both the first scramble ID and the second scramble ID are configured, the UE may determine which of the IDs is used as the data scrambling ID of the PDSCH, based on a TRP having transmitted at least one of the PDSCH and the DCI scheduling the

PDSCH.

For example, for the PDSCH transmitted from a certain TRP (for example, TRP 1), the UE may determine the data scrambling ID of the PDSCH, based on the first scramble ID for the DMRS for the PDSCH, and for the PDSCH transmitted from another TRP (for example, TRP 2), the UE may determine the data scrambling ID of the PDSCH, based on the second scramble ID for the DMRS for the

PDSCH.

In other words, the UE may assume that the first scramble ID for the DMRS for the PDSCH can be used as the data scrambling ID of the PDSCH from TRP 1 and that the second scramble ID for the DMRS for the PDSCH can be used as the data scrambling ID of the PDSCH from TRP 2.

Based on a DMRS sequence initialization field included in the DCI scheduling the PDSCH, the UE may determine which of the above-described first scramble ID and the above-described second scramble ID is used as the data scrambling ID of the PDSCH. For example, in a case where the DMRS sequence initialization field has a value (for example, 0 or 1) corresponding to the first (second) scramble ID, the UE may assume the first (second) scramble ID for initialization of the DMRS sequence of the PDSCH and use the first (second) scramble ID as the data scrambling ID of the PDSCH.

Note that when one of the above-described first scramble ID and second scramble ID is not configured, the UE may assume that the data scramble ID of the PDSCH from the TRP corresponding to the scramble ID not configured is a cell ID or a value provided by the RRC parameter "dataScramblingIdentityPDSCH."

Even in a case where the UE receives an indication of or assumes one TCI state for PDSCH reception, when at least one of the above-described first scramble ID and second scramble ID of the DMRS for the PDSCH is configured, the UE may determine the data scrambling ID of the PDSCH, based on at least one of the scramble IDs (for example, in accordance with mod (the first or second scramble ID, 1024).

Note that "1024" in the present embodiment may be any other value.

<<Embodiment 1-2>>

In Embodiment 1-2, for example, when multiple TRPs (or multiple PDSCHs) are configured, the UE may use Equation 2 below instead of Equation 1 as an equation for initialization of a scramble sequence applied to the PDSCH.

$$\text{(Equation 2)} \quad c_{init} = n_{RNTI} * 2^{15} + q * 2^{14} + n_{ID} + n_{ID2}$$

Here, $n_{ID2}$ corresponds to a term corresponding to information of a scramble sequence explicitly specified by a field in the DCI scheduling the PDSCH.

For example, when multiple TRPs for PDSCH reception are configured, the UE may assume that the DCI format scheduling the PDSCH (for example, DCI format 1_1) includes a field indicating a scramble ID for a scramble sequence for the PDSCH.

When receiving an indication of or assuming a plurality of TCI states for PDSCH reception, the UE may identify the value of $n_{ID2}$ in Equation 2 based on the value of the above-described field.

When receiving an indication of or assuming one TCI state for PDSCH reception, the UE may identify the value of $n_{ID2}$ in Equation 2, based on the value of the above-described field or assume that the above-described field is not used to determine the data scrambling ID of the PDSCH (in this case, the data scrambling ID of the PDSCH may be determined as described for Equation 1 or in Embodiment 1-1).

Note that the size of the above-described field may be X bits for a single TRP (or in a case where the UE receives an indication of one TCI state or assumes the TCI state) or may be X * the-number-of-TRPs bits for multiple TRPs (or in a case where the UE receives an indication of a plurality of TCI states or assumes the TCI states).

<<Embodiment 1-3>>

In Embodiment 1-3, the scramble sequence for the PDSCH may be initialized based on Equation 2 as in the case of Embodiment 1-2. However, Embodiment 1-3 differs from Embodiment 1-2 in that $n_{ID2}$ corresponds to a term corresponding to information of a scramble sequence explicitly specified by a field in the DCI scheduling the PDSCH.

The field in the DCI may be a field in existing DCI indicating another information and may correspond to, for example, any of the following fields or any of combinations of the following fields:

- HARQ (Hybrid Automatic Repeat reQuest (HARQ) process number (HARQ Process Number (HPN)) field (that may be referred to as an HARQ process ID field),
- Antenna port (s) field (or a CDM group corresponding to the value of the field, the number of DMRS CDM groups with no data, or the number of DMRS ports),

- DMRS sequence initialization field,
- PUCCH resource indicator field,
- TPC command field for the PUCCH to be scheduled,
- Downlink assignment index field,
- Frequency domain resource assignment field, and
- Time domain resource assignment field.

Note that in Embodiments 1-2 and 1-3, when N DCI fields are taken into account, $n_{ID2}$ in Equation 2 may be interpreted as $n_{ID2} + ... + n_{ID(N+1)}$. Each term of Equation 2 may be multiplied by any coefficient.

According to the first embodiment described above, for example, the scramble sequences for the PDSCHs transmitted from multiple TRPs can be appropriately determined.

<Second Embodiment>

In a second embodiment, the UE directly uses $C_{init}$ in Equation 1 to determine scramble sequences for multiple PDSCHs. However, the data scrambling ID (for example, $n_{ID}$ in Equation 1) of the PDSCH corresponds to one of higher layer parameters for the data scrambling IDs of a plurality of PDSCHs configured.

In existing Rel-15 NR, only one "dataScramblingIdentityPDSCH" is configured for BWP (or PDSCH configuration ("PDSCH-Config" information element)), whereas in the second embodiment, a plurality of higher layer parameters for the data scrambling IDs of the PDSCHs are configured.

Different TRPs may correspond to the higher layer parameters for the data scrambling IDs of a plurality of PDSCHs configured. The correspondence relationship between the higher layer parameters and the TRPs may be specified by higher layer signaling or defined by specifications (for example, a certain parameter corresponds to TRP 1, and another parameter corresponds to TRP 2).

Briefly speaking, the second embodiment can be classified into the following embodiments, each of which will be described below.

- Embodiment 2-1: in addition to "dataScramblingIdentityPDSCH," another higher layer parameter related to the data scrambling ID of one PDSCH is configured for the UE.
- Embodiment 2-2: a new higher layer parameter related to the data scrambling IDs of a plurality of PDSCHs is configured for the UE.

<<Embodiment 2-1>>

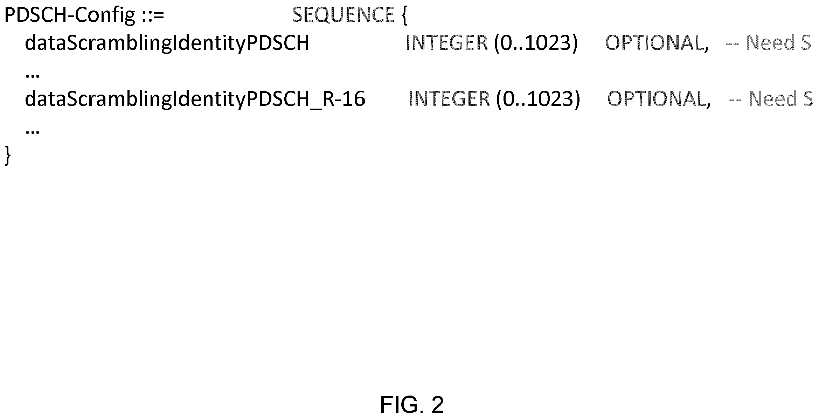

FIG. 2 is a diagram to show a part of content of an RRC information element "PDSCH-Config" according to Embodiment 2-1. FIG. 2 is illustrated by using ASN. 1 (Abstract Syntax Notation One) .

The RRC information element "PDSCH-Config" may include a parameter "dataScramblingIdentityPDSCH." The parameter "dataScramblingIdentityPDSCH" is a value related to the data scramble ID of the PDSCH and may be expressed by an integer of 0 or more and 1023 or less.

The RRC information element "PDSCH-Config" may include a parameter "dataScramblingIdentityPDSCH_R-16." The parameter "dataScramblingIdentityPDSCH_R-16" is a value related to the data scramble ID of the PDSCH and may be expressed by an integer of 0 or more and 1023 or less. Note that "dataScramblingIdentityPDSCH_R-16" is intended to be a parameter that may be introduced in Rel-16 NR but may be introduced in Rel-17 NR or later versions and that the name is not limited to this.

Even when "dataScramblingIdentityPDSCH_R-16" is configured, for the PDSCH transmitted from a single TRP (which may be referred to as a single PDSCH), the UE may determine the data scrambling ID of the PDSCH, based on "dataScramblingIdentityPDSCH."

When "dataScramblingIdentityPDSCH_R-16" is configured, for the PDSCHs transmitted from multiple TRPs (multiple PDSCHs), the UE may determine the data scrambling ID of the PDSCH from a certain TRP (for example, TRP 1), based on "dataScramblingIdentityPDSCH" and may determine the data scrambling ID of the PDSCH from another TRP (for example, TRP 2), based on "dataScramblingIdentityPDSCH_R-16."

<<Embodiment 2-2>>

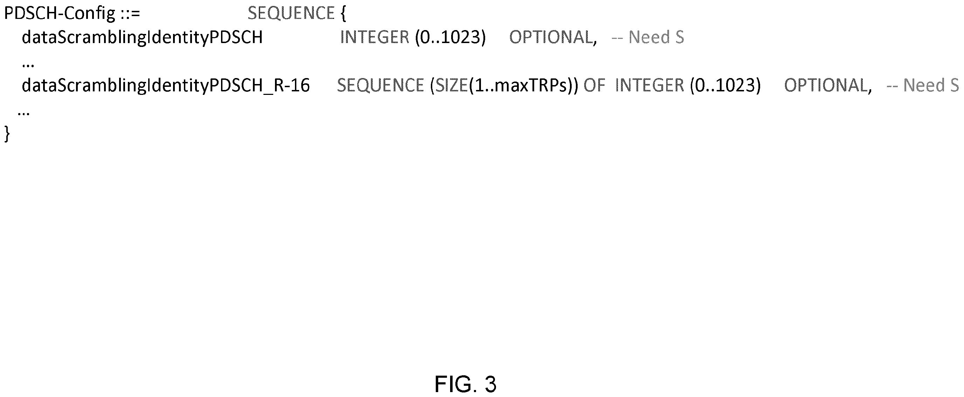

FIG. 3 is a diagram to show a part of content of the RRC information element "PDSCH-Config" according to Embodiment 2-2. FIG. 3 is illustrated by using ASN. 1.

The RRC information element "PDSCH-Config" may include a parameter "dataScramblingIdentityPDSCH." The parameter "dataScramblingIdentityPDSCH" is a value related to the data scramble ID of the PDSCH and may be expressed by an integer of 0 or more and 1023 or less.

The RRC information element "PDSCH-Config" may include a parameter "dataScramblingIdentityPDSCH_R-16." The parameter "dataScramblingIdentityPDSCH_R-16" may be a sequence of values related to the data scramble ID of the PDSCH. The sequence as used herein is one of fields expressing the type of an ASN. 1 object and may be referred to as a sequence type.

The parameter "dataScramblingIdentityPDSCH_R-16" may indicate a sequence of maxTRPs integer values. Here, maxTRPs may be the maximum value of the number of TRPs configured for the UE. Note that maxTRPs may be interpreted as the number of TRPs configured for the UE. maxTRPs may be, for example, 2 or more.

Even when "dataScramblingIdentityPDSCH_R-16" is configured, for the PDSCH transmitted from a single TRP (single PDSCH), the UE may determine the data scrambling ID of the single PDSCH, based on "dataScramblingIdentityPDSCH."

In other words, when receiving an indication of or assuming one TCI state for PDSCH reception, the UE may assume that the data scrambling ID of the PDSCH is configured by "dataScramblingIdentityPDSCH."

When "dataScramblingIdentityPDSCH_R-16" is configured, for the PDSCHs transmitted from multiple TRPs (multiple PDSCHs), the UE may determine the data scrambling IDs of the multiple PDSCHs, based on "dataScramblingIdentityPDSCH_R-16."

In other words, when receiving an indication of or assuming a plurality of TCI states for PDSCH reception, the UE may assume that the data scrambling IDs of the PDSCHs are configured by "dataScramblingIdentityPDSCH_R-16."

Note that the ith value in "dataScramblingIdentityPDSCH_R-16" may correspond to the ith TRP in order of increasing (or decreasing) TRP index. Which of the TRPs the ith value in "dataScramblingIdentityPDSCH_R-16" corresponds to may be defined by specifications or configured by higher layer signaling as described above.

In regard to FIG. 3, the example has been described in which the UE uses "dataScramblingIdentity PDSCH" dedicated to a single PDSCH (single TRP) and uses "dataScramblingIdentityPDSCH_R-16" dedicated to multiple PDSCHs (multiple TRPs). However, no such limitation is intended.

For example, the UE may use "dataScramblingIdentity PDSCH" for a single PDSCH and for a TRP with multiple PDSCHs (for example, TRP 1). In this case, the UE may use a value selected from a plurality of values included in "dataScramblingIdentity PDSCH_R-16" for a another TRP for the multiple PDSCHs (for example, TRP 2).

Even when "dataScramblingIdentityPDSCH" is configured, the UE may use, for a single PDSCH, a value selected from the plurality of values included in "dataScramblingIdentityPDSCH_R-16."

According to the second embodiment described above, for example, the scramble sequences for the PDSCHs transmitted from multiple TRPs can be appropriately determined.

<Other Embodiments>

Equation 1, Equation 2, and the like in the embodiments described above are merely examples, and the equation used to initialize the data scramble sequence for the PDSCH is not limited to these equations.

The embodiments described above may include dynamic switching from multiple TRPs to a single TRP.

Even when multiple TRPs are configured, when receiving an indication of or assuming one TCI state for PDSCH reception (this may be referred to as instantaneously turning into a single TRP), the UE may generate or determine the data scrambling ID of the PDSCH on the assumption of a single TRP. In this case, it may be assumed that the UE use any one of the TCI states for the multiple TRPs.

When multiple TRPs are configured, when receiving an indication of or assuming a plurality of TCI states for PDSCH reception, the UE may generate or determine the data scrambling IDs of the PDSCHs on the assumption of the multiple TRPs. In this regard, the value of the ith scramble ID generated or determined may correspond to the ith TRP in order of increasing (or decreasing) TRP index.

In the present disclosure, the single PDCCH (DCI) may be referred to as a PDCCH (DCI) of a first scheduling type (for example, scheduling type A (or type 1)). The multiple PDCCHs (DCI) may be referred to as PDCCHs (DCI) of a second scheduling type (for example, scheduling type B (or type 2)).

In the present disclosure, the single PDCCH may be assumed to be supported in a case where the multiple TRPs utilize an ideal backhaul. The multiple PDCCHs may be assumed to be supported in a case where the multiple TRPs utilize a non-ideal backhaul.

Note that the ideal backhaul may be referred to as DMRS port group type 1, reference signal related group type 1, antenna port group type 1, and so on. The non-ideal backhaul may be referred to as DMRS port group type 2, reference signal related group type 2, antenna port group type 2, and so on. The names are not limited to these.

In the present disclosure, which of the TRPs is to be scheduled by the DCI may be explicitly specified by a bit field in the DCI. In a case where at least one of a CORESET, a search space set, a QCL, a TCI state, and the like corresponding to TRPs is configured in advance, the UE may determine which of the TRPs is to be scheduled by the DCI, based on at least one of the CORESET, search space set, QCL, TCI state, and the like having detected the DCI.

**(Radio Communication System)**

Hereinafter, a structure of a radio communication system according to one embodiment of the present disclosure will be described. In this radio communication system, the radio communication method according to each embodiment of the present disclosure described above may be used alone or may be used in combination for communication.

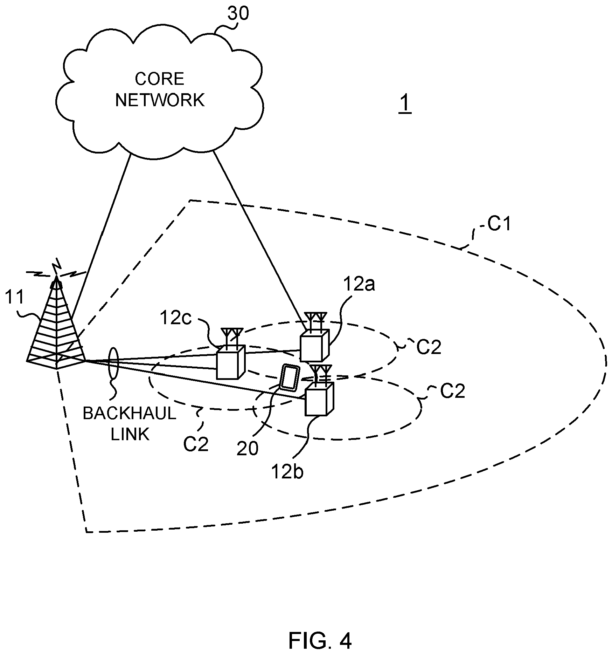

FIG. 4 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are transmitted on the PDSCH. User data, higher layer control information and so on may be transmitted on the PUSCH. The Master Information Blocks (MIBs) may be transmitted on the PBCH.

Lower layer control information may be transmitted on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One search space may correspond to a PDCCH candidate corresponding to one or more aggregation levels. Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be transmitted by means of the PUCCH. By means of the PRACH, random access preambles for establishing connections with cells may be transmitted.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be transmitted. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be transmitted as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be transmitted as an uplink reference signal (UL-RS). Note that DMRS may be referred to as a "user terminal specific reference signal (UE-specific Reference Signal)."

(Base Station)

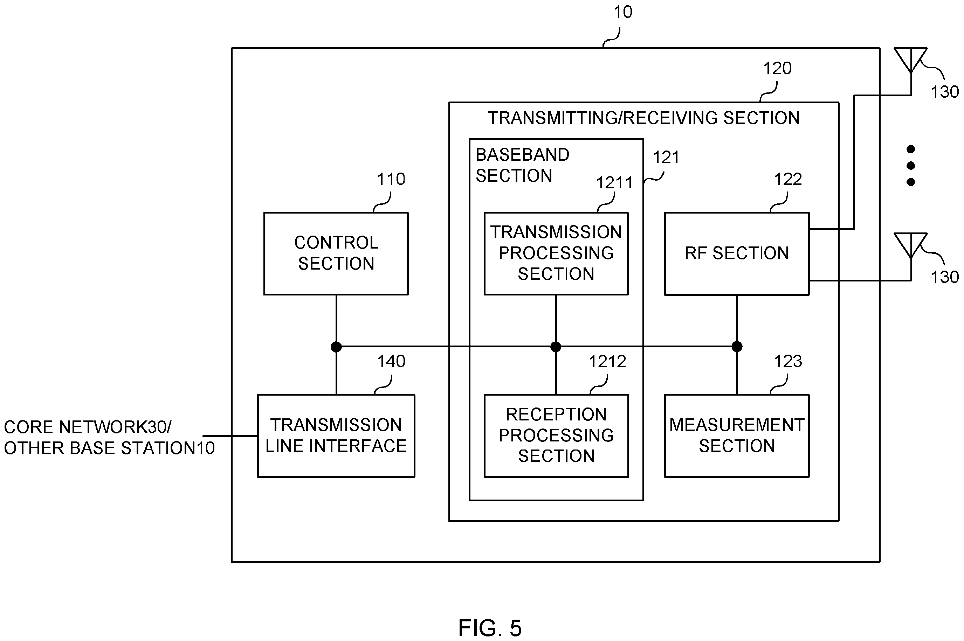

FIG. 5 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmission beam and a reception beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

Note that the transmitting/receiving sections 120 may transmit a PDSCH to the user terminals 20. The control section 110 may control the PDSCH such that the PDSCH overlaps, in terms of at least either time or frequency resources, a PDSCH transmitted from another base station 10.

(User Terminal)

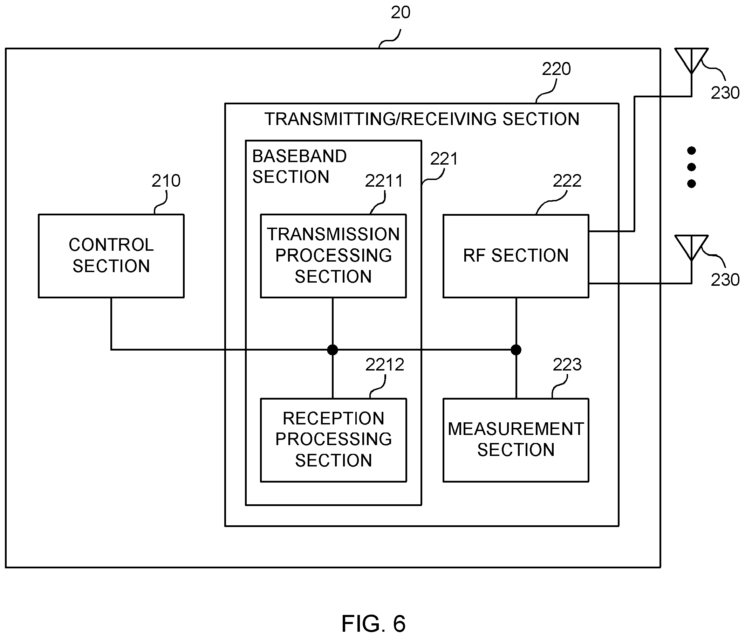

FIG. 6 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be constituted as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmission beam and a reception beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (the RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (the RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (the measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive a first PDSCH (Physical Downlink Shared Channel) from a first transmission/reception point (TRP) and a second PDSCH from a second TRP that overlaps the first PDSCH in terms of at least either time or frequency resources. In other words, the transmitting/receiving section 220 may receive multiple PDSCHs.

In a case where a given condition is satisfied, the control section 210 may determine, based on a first identifier utilized to initialize a pseudo random sequence generator used to generate a sequence for a specific reference signal, a second identifier for data scrambling of the PDSCHs.

The specific reference signal may be a demodulation reference signal (DMRS) for the PDSCHs. For example, the first identifier may correspond to a scramble ID parameter (at least one of scramblingID0, scramblingID1, and the like) included in an RRC information element "DMRS-DownlinkConfig" related to the DMRS for the PDSCHs.

The second identifier may correspond to, for example, at least one of $n_{ID}$ in Equation 1, $n_{ID}$ and $n_{ID2}$ in Equation 2, and the like.

When receiving an indication of or assuming a plurality of Transmission Configuration Indication states (TCI states) for reception of the PDSCHs, the control section 210 may determine the second identifier, based on the first identifier.

When receiving an indication of or assuming one Transmission Configuration Indication state (TCI state) for reception of the PDSCHs, the control section 210 may determine the second identifier, based on a higher layer parameter (for example, the RRC parameter "dataScramblingIdentityPDSCH" defined in Rel-15 NR as well) related to an identifier data scrambling of the PDSCH.

When a plurality of the first identifiers are configured (for example, when both "scramblingID0" and "scramblingID1" are configured), the control section 210 may determine which of a plurality of the first identifiers is used to determine the second identifier, based on the TRPs corresponding to the PDSCHs.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

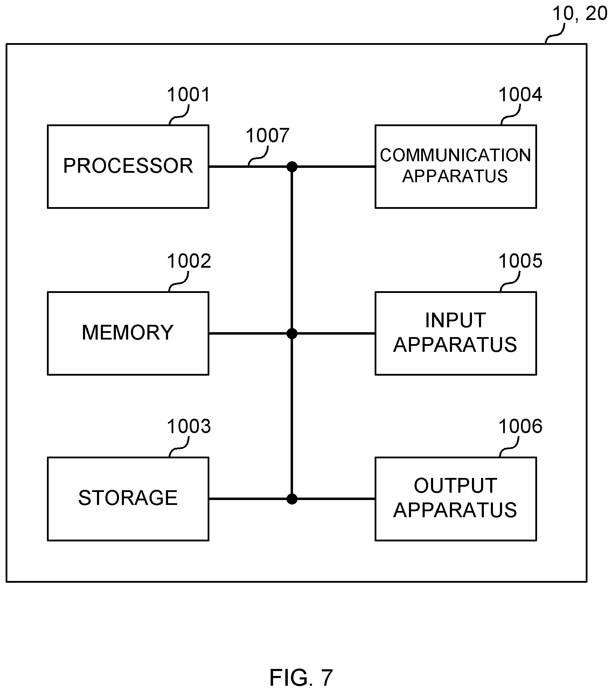

For example, a base station, a user terminal, and so on according to one embodiment of the present disclosure may function as a computer that executes the processes of the radio communication method of the present disclosure. FIG. 7 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on).

Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be indicated by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1.  A user terminal comprising:

    a receiving section that receives downlink shared channels (Physical Downlink Shared Channels (PDSCHs)) from a plurality of transmission/reception points (TRPs); and
    a control section that determines, based on a first identifier utilized to initialize a psudo random sequence generator used to generate a sequence for a specific reference signal, a second identifier for data scrambling of the PDSCHs in a case where a given condition is satisfied.

2.  The user terminal according to claim 1, wherein
    the specific reference signal is a demodulation reference signal (DMRS) for the PDSCHs.

3.  The user terminal according to claim 1 or 2, wherein
    when receiving an indication of or assuming a plurality of Transmission Configuration Indication states (TCI states) for reception of the PDSCHs, the control section determines the second identifier, based on the first identifier.

4.  The user terminal according to any one of claims 1 to 3, wherein
    when receiving an indication of or assuming one Transmission Configuration Indication state (TCI state) for reception of the PDSCHs, the control section determines the second identifier, based on a higher layer parameter related to an identifier for data scrambling of the PDSCHs.

5.  The user terminal according to any one of claims 1 to 4, wherein
    when a plurality of the first identifiers are configured, the control section determines which of a plurality of the first identifiers is used to determine the second identifier, based on the TRPs corresponding to the PDSCHs.

6. A radio communication method for a user terminal, the radio communication method comprising:

receiving downlink shared channels (Physical Downlink Shared Channels (PDSCHs)) from a plurality of transmission/reception points (TRPs); and

determining, based on a first identifier utilized to initialize a psudo random sequence generator used to generate a sequence for a specific reference signal, a second identifier for data scrambling of the PDSCHs in a case where a given condition is satisfied.

FIG. 1B — SINGLE MASTER MODE

FIG. 1A — SINGLE MODE

FIG. 1D — MULTI-MASTER MODE

FIG. 1C — MASTER SLAVE MODE

```
PDSCH-Config ::=                  SEQUENCE {
    dataScramblingIdentityPDSCH              INTEGER (0..1023)    OPTIONAL,  -- Need S
    ...
    dataScramblingIdentityPDSCH_R-16         INTEGER (0..1023)    OPTIONAL,  -- Need S
    ...
}
```

FIG. 2

EP 3 962 197 A1

```
PDSCH-Config ::=                    SEQUENCE {
   dataScramblingIdentityPDSCH              INTEGER (0..1023)    OPTIONAL,  -- Need S
   ...
   dataScramblingIdentityPDSCH_R-16    SEQUENCE (SIZE(1..maxTRPs)) OF  INTEGER (0..1023)    OPTIONAL,  -- Need S
   ...
}
```

FIG. 3

FIG. 4

FIG. 5

10

120 TRANSMITTING/RECEIVING SECTION

130

122 RF SECTION

123 MEASUREMENT SECTION

121 BASEBAND SECTION

1211 TRANSMISSION PROCESSING SECTION

1212 RECEPTION PROCESSING SECTION

110 CONTROL SECTION

140 TRANSMISSION LINE INTERFACE

CORE NETWORK30/ OTHER BASE STATION10

FIG. 6

10, 20

FIG. 7

## INTERNATIONAL SEARCH REPORT

| International application No. |
| --- |
| PCT/JP2019/018123 |

### A. CLASSIFICATION OF SUBJECT MATTER
Int.Cl. H04W72/04(2009.01)i

According to International Patent Classification (IPC) or to both national classification and IPC

### B. FIELDS SEARCHED

Minimum documentation searched (classification system followed by classification symbols)
Int.Cl. H04B7/24-7/26, H04W4/00-99/00

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | HUAWEI, HISILICON, Enhancements on Multi-TRP/panel transmission[online], 3GPP TSG RAN WG1 #96b R1-1903970, 29 March 2019, [retrieved on 25 November 2019], Internet:<URL:https://www.3gpp.org/ftp/tsg_ran/WG1_RL1/TSGR1_96b/Docs/R1-1903970.zip>, section 2.1.2 | 1-6 |
| A | PANASONIC, On multi-TRP enhancements for NR MIMO in Rel. 16[online], 3GPP TSG RAN WG1 #96b R1-1904190, 29 March 2019, [retrieved on 25 November 2019], Internet:<URL:https://www.3gpp.org/ftp/tsg_ran/WG1_RL1/TSGR1_96b/Docs/R1-1904190.zip>, section 2.2 | 1-6 |

☐ Further documents are listed in the continuation of Box C.  ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 25.11.2019 | 03.12.2019 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010